# EUROPEAN PATENT SPECIFICATION

(11) **EP 0 434 562 B1**
(45) Date of publication and mention of the grant of the patent: **23.08.1995**
(21) Application number: 90403690.2
(22) Date of filing: 20.12.1990
(51) Int. Cl.: B01D 53/22, C01B 3/50, C10K 3/04

(54) **Process and apparatus for removing carbon monoxide from gaseous mixture containing hydrogen**
Verfahren und Vorrichtung zum Abscheiden von Kohlenwasserstoffmonoxid aus Wasserstoff enthaltenden Gasgemischen
Procédé et dispositif pour éliminer le monoxyde de carbone des mélanges de gaz contenant de l'hydrogène

(30) Priority: 20.12.1989 FR 8916869
(43) Date of publication of application: 26.06.1991
(73) Proprietor: MEDAL 1.p., Wilmington, Delaware 19898 (US)
(72) Inventor: Brigand, Phillipe, F-94500 Champigny (FR)
(74) Representative: Vesin, Jacques

(56) References cited:
- CH-A- 237 947
- GB-A- 2 194 958
- US-A- 3 251 652
- US-A- 4 732 583

## Description

The present invention concerns a process for removing carbon monoxide from a gaseous mixture containing at least about 20 volume % of hydrogen and at most about 35 volume % of carbon monoxide, in which said carbon monoxide is substantially removed by reaction with a portion of the hydrogen present in the gaseous mixture, to produce a hydrocarbon and water.

The invention also concerns an apparatus enabling, for example, to carry out such process as well as the use of such process in a hydrogenation unit.

In the hydrogenation units used for example in refining or petrochemistry, such as units for the hydrodesulfurization of gas-oil, gaseous flows containing hydrogen, which are available in other parts of the refining or petrochemical units, are frequently used or recycled. However, these gaseous flows contain certain components which can be disastrous for subsequent use of the hydrogen.

A number of refinery or petrochemical flushing gases contain carbon monoxide in addition to hydrogen. Now carbon monoxide has a deactivating effect on the hydrogenation catalysts used during the reaction of hydrogen with hydrocarbons to produce hydrogenated derivatives. It is therefore necessary to remove this carbon monoxide before utilizing the flow of hydrogen. It is generally estimated that to be suitable for a hydrogenation process, the gaseous flow should contain at least 90 volume % hydrogen and less than 50 ppm carbon monoxide.

A solution presently used to solve the problem of the removal of carbon monoxide consists in utilizing a process of adsorption on molecular sieves (Pressure Swing Adsorption or PSA). There is thus easily obtained hydrogen which is purified at more than 99% and having less than 50 ppm carbon monoxide.

A PSA generally operates at pressures in the vicinity of 20 to 30 bars and enables to recover about 80% of the hydrogen present in the gaseous flow. The 20% residual gases are rejected by the PSA at a very low pressure, of the order of 0,5 bar active and it is necessary to recompress this residual gas at about 4 bars to be able to use the same in the network of fuel gas for the petrochemical plant, otherwise this residual gas is lost, which increases the cost of operating the petrochemical unit.

The disadvantage of such a solution utilizing a PSA is therefore essentially one of cost: in addition to the high investment required for the apparatus per se, there should be provided an additional compressor for the residual gas or decide not to recover the residual gas as a fuel gas, which causes an operation loss.

Another known solution would consist in removing carbon monoxide by passing it through a methanator: the carbon monoxide then reacts with a portion of the gaseous flow of hydrogen to produce methane.

The gas which exits from the methanator is then depleted of hydrogen but enriched in its components other than hydrogen and carbon monoxide: thereafter, this requires a purification by known means, such as a PSA, a membrane capable of preferentially allowing hydrogen to pass through and preferentially retaining the other components.

The economical result is generally too high, in view of the size of the methanator and the purifying means, as compared to the benefits resulting from the recovery of hydrogen from the gaseous flow.

In U.S. Patent No. 3251652 a process for purifying hydrogen from a mixture of hydrogen and carbon monoxide by passing the mixture through a hydrogen permeable membrane is described, with possible methanation of carbon monoxide.

The process according to the invention enables to remove carbon monoxide from the gaseous flow while remaining economically acceptable for the user of said process.

The process of the present invention comprises recovering hydrogen from a gaseous feed mixture containing at least about 20 volume % hydrogen and less than about 35 volume % carbon monoxide, and a sulfur-containing gas component selected from the group consisting of hydrogen-sulfide and one or more mercaptans which are poisons for methanator catalysts. The hydrogen recovery method comprises passing the gaseous mixture through a membrane which is more permeable to hydrogen than to carbon monoxide, thereby forming a permeate which is enriched in hydrogen and depleted in carbon monoxide and having a residual amount of said sulfur-containing compounds therein, which residual amount is less than the amount thereof in the gaseous feed mixture, treating the permeate to remove the majority of residual sulfur-containing compounds contained in the gaseous mixture, and treating the permeate to remove the majority of carbon monoxide present therein.

Thus the utilization of the appropriate membrane not only enables to enrich the gaseous flow with hydrogen up to the desired concentration, but also to deplete said flow of carbon monoxide which thereafter enables to use a means of removing carbon monoxide, such as a methanator, of substantially reduced sizes than when there is no elimination of a portion of the carbon monoxide with the membrane.

The process according to the invention includes a particularly advantageous feature which is applicable to the case in which the gaseous mixture to be purified contains sulphur containing products such as H₂S or mercaptans.

It has been observed that these products constitute "poisons" for the catalysts used in the methanation reaction. This is the reason why, according to the invention, a membrane which is capable of at least partially blocking sulphur-containing products is preferably selected, this step of permeation through said membrane being followed by a step of removing said sulphur-containing products, for example by washing with caustic soda and/or by washing with amines and/or passing them over a catalytic bed containing zinc oxide.

In a general manner, the gas to be treated, which is available under high pressure, for example from 40 to 120 bars, is first sent over the semi-permeable membranes. It is separated into two flows: a permeated product which is rich in hydrogen and a residue which is depleted of hydrogen. The permeated product contains more than 90% H₂ and is at a mean pressure, about 10 to 40 bars. Most of the hydrogen sulphide and carbon monoxide has been removed from the permeate; however, the carbon monoxide content is not sufficiently low and does not reach the few tenths of ppm required.

In a second step it is recommended to remove carbon monoxide from enriched hydrogen (permeated product). This is obtained by treatment of the permeated product in a methanator which converts the carbon monoxide into methane according to the reaction:

CO + 3 H₂ <=====> CH₄ + H₂O

This reaction generally takes place at about 250°C over a catalytic bed. However, this catalyst is very sensitive to the presence of hydrogen sulphide or other sulphur-containing products such as mercaptans which destroy same.

Previous to the methanation, it is therefore necessary to remove hydrogen sulphide and to reduce the content thereof to about a few tenths of ppb.

Depending on the content of hydrogen sulphide, or other sulphur-containing products, three processes are possible:
- for high contents of sulphur-containing products, washing with amines may be used to decrease the content to about 20 to 50 ppm. A trap of catalytic bed containing zinc oxide (ZnO) enables to remove the last traces of hydrogen sulphide to less than 10 ppb according to the reaction.

   H₂S + ZnO =====> H₂O + ZnS

   The catalyst should be replaced periodically.
- for average contents of sulphur-containing products, for example from 100 to 20 ppm, washing with caustic soda which is better adapted to these mean contents from a cost point of view, may be used.
   The content of hydrogen sulphide is of the order of 1 ppm at the outlet of the washing with caustic soda. The last traces are removed as previously on a trap of zinc oxide.
- for low contents of sulphur-containing products, less than 20 ppm, a trap of ZnO is sufficient.

If the content of sulphur-containing products is higher than about 20 ppm, it is more economical to combine a trap of ZnO and another process than to use only a trap of ZnO.

Suitable membranes include all membranes which, under the operating conditions selected, are capable of producing a permeated product containing a higher amount of hydrogen and preferably a lesser amount of carbon monoxide with respect to the gaseous flow which is sent over the membrane.

Generally, although the invention is not limited to this type of membranes, those which are preferably used include membranes made of hollow fibers derived from an organic polymer, generally including homo- or copolymers of the products mentioned hereinafter, which are substituted or unsubstituted, such as polysulfones, polystyrenes, and especially polymers containing a styrene unit such as the copolymers of styrene and acrylonitrile, butadiene and styrene, polycarbonates, cellulosic polymers such as acetate, aceto-butyrate, aceto-propionate of cellulose, ethyl- or methyl-, cellulose, nitrocellulose, etc..., polyamides, polyimides, e.g. polyimides having an aryl substituent, polyethers, polyarylene oxides, polyesteramide diioscyanates, polyurethanes, polyesters, such as polyacrylates and, for example, ethylene polyterephthalate, polysulfides, polyethylene, polypropylene, polybutene-1, etc...

Details concerning the preferred polymers and the production of fibers and the coresponding permeators can be found in U.S. Patents 3 442 002; 3 499 062; 3 503 515; 3 526 001; 3 528 553; 3 567 632; 3 616 928; 3 690 465; 3 702 658; 3 775 361; 3 801 401; 3 822 202; 3 832 830; 3 899 309; 4 068 387; 4 080 743; 4 080 744; 4 113 628; 4 120 098; 4 622 143; 4 670 145; 4 705 540; 4 717 393; 4 717 394.

In a general manner, membranes which are more permeable to hydrogen than carbon monoxide will be used.

In a general manner, the concentration of carbon monoxide in the gaseous flow which is produced by the membrane should be lower than the limit which is acceptable by the methanator. This limit is generally of the order of 3 to 5 volume %.

The quantity of carbon monoxide in the gaseous mixture will generally be at most equal to about 35 volume %. This higher limit generally corresponds to processes for the partial oxidation of natural gas (production of synthesis gas H₂/CO). The invention can also be used with processes for vapor reforming of natural gas, naphtha, etc...

In this case, the concentration of carbon monoxide will not be generally higher than about 25 volume %.

In a general manner, it has however been observed that working of the invention is more especially economical since the initial quantity of carbon monoxide in the mixture is not too high. A quantity of CO which is not higher than about 10 volume % enables to arrive at a good economical compromise.

The invention also concerns apparatuses for carrying out of the above process as well as the use of said process for refining by hydrotreatment or hydrocracking.

The invention will be better understood by means of the examples which follow, which are given without any intention to limit this invention, in connection with the following Figures of drawings which represent:
- Figure 1 is a schematic representation of a process not according to the literal scope of claim 1 or 7 which define the invention, as sulfur compound removal is absent,
- Figure 2 is a schematic representation of a process according to an embodiment of the invention.

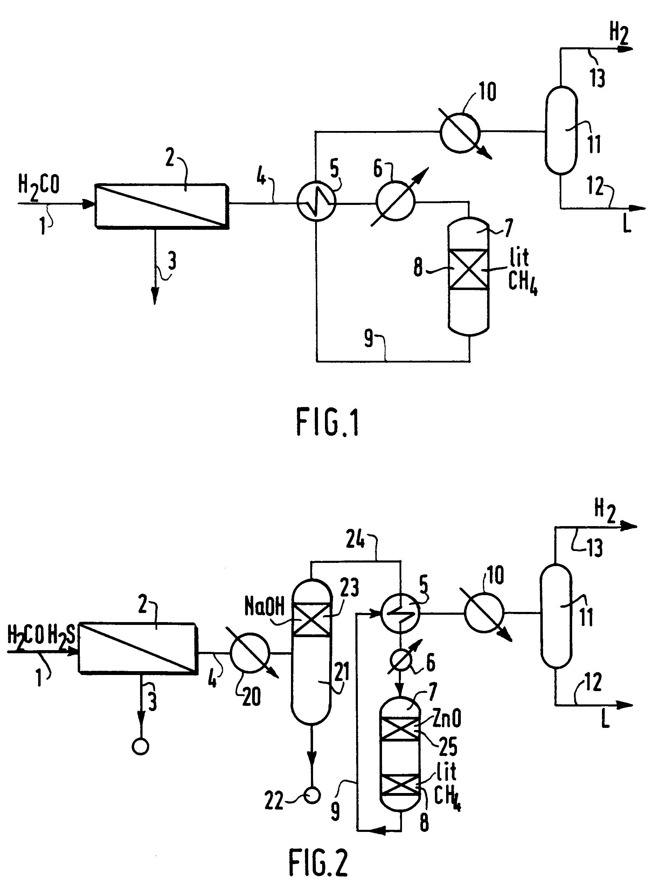

In Figure 1, the gaseous mixture 1 contains various gases, but essentially hydrogen, hydrocarbons and carbon monoxide (but no sulphur derivatives).

The permeated product 2, enriched in hydrogen and generally depleted of carbon monoxide, is sent via 4 into exchanger 5 in which the temperature of the permeated product is raised upon contact with the gas 9, then brought to about 250°C in the apparatus 6, used for example for heating with vapor. The gas is then substantially depleted of its carbon monoxide in the enclosure 7 by contact with methanation bed 8 which transforms the carbon monoxide and a portion of the hydrogen into methane. The gas 9, which is substantially depleted of its carbon monoxide is first cooled upon contact with the cold permeated product 2, in the exchanger 5, then upon contact with a refrigeration unit 10, it is brought to room temperature.

The enclosure 11 enables to separate the liquids which are condensed at 12 and purified hydrogen at 13.

The gaseous mixture which has not passed through the membrane 2 (unpermeated product), depleted of hydrogen but generally enriched in CO, can be recovered in the fuel gas network. This gas is at a pressure near the pressure of the gas injected into the membrane and it is generally necessary to expand same before mixing it with fuel gases.

Figure 2 represents an embodiment of the invention in which the gaseous mixture includes one or more sulphur derivatives.

The same elements as those of Figure 1 are identified by the same numerals. The permeated product 4 is first cooled, if necessary, in cooler 20, then is treated with caustic soda 23 in enclosure 21 to remove hydrogen sulphide present in the gaseous mixture. The condensate products can be recovered at 22. The purified gas is sent through duct 24 to exchanger 5, then to apparatus 7 where its temperature is sufficient to remove the carbon monoxide present therein. In the present case, we have successively represented a bed of zinc oxide 25 to completely remove the traces of sulphur-containing product before removing the carbon monoxide by methanation, at 8. Lowering of the temperature of the gas followed by its recovery are the same as in the example of Figure 1.

### EXAMPLE

The gaseous mixture has the following composition:

| | % vol. |
|---|---|
| H₂ | 66,14 |
| N₂ | 3,32 |
| CO | 1,27 |
| CH₄ | 23,25 |
| C₂H₆ | 3,96 |
| C₃H₈ | 1,40 |
| C₄H₁₀ | 0,45 |
| C₅H₁₂ + | 0,09 |
| H₂O | 0,12 |
| H₂S | 100 ppm |
| HCl | 2 ppm |

The flow rate is 12 700 Nm3/h, the pressure is 89 bar absolute and the temperature is 48°C.

The performance data to be reached are the following:
- H₂ content > 95 volume %
- CO content < 50 ppm
- pressure of product > 25 bar act.

The gas 1 at 48°C and 89 bar act. passes through the membrane unit 2 which separates the gas into two flows: a permeated product 4 with high content of H₂ at 26,2 bar act. and 90°C and a residue (3) at 86,3 bar act. and 90°C.

The H₂ content in the permeated product is 95,6%, the CO content is 0,34% and the H₂S content is 80 ppm. The flow rate of the permeated product is 7544 Nm3/h.

Since the H₂S content of the permeated product is 80 ppm, it was decided to wash with caustic soda followed by a trap of zinc oxide to remove H₂S.

The permeated product (4) which exits from the membranes is cooled from 90°C to 40°C at 20 before penetrating into the column for washing with caustic soda 21. The H₂S content of gas (24) which exits from the column is about 1 ppm and the remaining quantity of H₂S can then be removed by the ZnO trap 25 in the enclosure 7.

Hydrogen is first warmed up against the gas which exits from the methanator (at 5) then heated at about 250°C at 6 by means of vapor.

Since the quantity of H₂S to be removed by the ZnO trap is low, the latter can operate at the same temperature as the methanator, i.e. at about 250°C while only one trap would have to be operated at 400°C. In addition, since the ZnO trap is small as most of the H₂S is removed by washing with caustic soda, and in view of the fact that it operates at the same temperature as the methanator, the bed of ZnO can be placed in the same enclosure 7 as the methanation catalyst.

After having passed over the catalytic bed 25 for the removal of sulphur, hydrogen keeps passing at 7 over the methanation catalytic bed 8. This hydrogen (9) exits at about 275°C and is cooled against the inlet gas at 5. A final refrigeration at 40°C is then carried out at 10 as well as a separation of the possible condensation products at 11. Hydrogen (13) is then produced.

## Claims

1. A process for recovering hydrogen from a gaseous feed mixture, containing at least about 20 volume % hydrogen, less than about 35 volume % carbon monoxide, and sulfur-containing gas component selected from the group consisting of hydrogen-sulfide and one or more mercaptans which are poisons for methanator catalysts, which process comprises:
a) passing the gaseous mixture through a membrane which is more permeable to hydrogen than to carbon monoxide, thereby forming an intermediate permeate stream which is enriched in hydrogen and depleted in carbon monoxide to an extent acceptable for methanation and having a residual amount of said sulfur-containing compounds therein, which residual amount is less than the amount thereof in the gaseous feed mixture,
b) treating the intermediate permeate to reduce the concentration to less than about a few tenths ppb of residual sulfur-containing compounds contained in the gaseous mixture, and
c) treating the product of step b) by methanation to remove the majority of carbon monoxide present therein.

2. The process as recited in Claim 1 wherein the intermediate permeate stream prior to the sulphur treatment step comprises less than 5 vol. % carbon monoxide and contains up to substantially 20 ppm of a sulphur-containing product and further wherein the process in the sulfur treatment step comprises removing at least a portion of said sulphur-containing products by passing the permeated product on a catalytic bed.

3. The process as recited in Claim 2 wherein the catalytic bed is based on zinc oxide (ZnO) and wherein the thickness and the density of the bed as well as the flow of the permeated product through said bed are such that the concentration of sulphur-containing product in the permeated product after the step of elimination is substantially near or lower than 10 ppb.

4. The process as recited in Claim 1 wherein the intermediate permeate contains at the outlet of the membrane substantially from 20 to 100 ppm of a sulphur-containing product and said treatment step b) further comprising the steps of:
a) eliminating at least a portion of said sulphur-containing products by washing with caustic soda, and
b) passing the same over a catalytic bed based on zinc oxide.

5. The process as recited in Claim 1 wherein the intermediate permeate contains, at the outlet of the membrane, substantially 100 ppm or more of a sulphur-containing product and said treatment step b) further comprising the steps of:
a) eliminating said sulphur-containing products by washing with amines so as to give a gas containing about at most 50 ppm of sulphur-containing products, and
b) passing over a catalytic bed based on zinc oxide.

6. The process as recited in one of Claims 1 to 5 wherein the permeated and sulphur-treated product is heated before the step of methanation, a portion of the heat being recovered by heat exchange with the gas resulting from the step of methanation.

7. Apparatus for the recovery of hydrogen in a gaseous mixture comprising carbon monoxide and sulfur-containing compounds, said apparatus comprising:
a) means for permeating said gaseous mixture through a membrane, said membrane being more permeable to hydrogen than to carbon monoxide, and
b) a methanation unit,
c) a desulfurization unit mounted between an outlet of the permeation means and the inlet of the methanation unit;
said methanation unit having an inlet which receives permeated product enriched in hydrogen which exits from the permeation means and in which an outlet delivers a gaseous flow which is substantially depleted of carbon monoxide.

8. Apparatus as recited in Claim 7 wherein the desulfurization unit includes a trap of zinc oxide (ZnO).

9. Apparatus as recited in Claim 8 wherein the concentration of sulphur-containing products is higher than 100 ppm in volume in the gaseous mixture at the outlet of the permeation unit (2), and wherein the desulfurization unit further comprises at the inlet an amine washing tower.

10. Apparatus as recited in Claim 8 wherein the concentration of sulphur-containing products in the gaseous mixture is between 100 ppm and 20 ppm by volume at the outlet of the permeation unit (2), and wherein the desulfurization unit further comprises at its inlet a caustic soda washing tower.

11. Apparatus as recited in Claim 8 wherein the temperature of the methanation unit (8) is raised at lower than 400°C, and wherein the concentration of sulphur-containing products in the gaseous mixture at the inlet of the methanation unit being of the order of 1 ppm, and further wherein the trap of zinc oxide (ZnO) is disposed at the inlet of the methanation unit (8).

12. Use of the process as recited in one of Claims 1 to 6 in a hydrotreatment and/or hydrocracking unit.

## Patentansprüche

1. Verfahren zum Rückgewinnen von Wasserstoff aus einem gasförmigen Zufuhrgemisch, das zumindest etwa 20 Vol.% Wasserstoff, weniger als etwa 35 Vol.% Kohlenmonoxid und einen Schwefel enthaltenden Bestandteil enthält, der aus der aus Schwefelwasserstoff und einem oder mehreren Mercaptanen bestehenden Gruppe ausgewählt wird, welche Methanator-Katalysatoren vergiften, wobei das Verfahren die folgenden Schritte aufweist:
a) Hindurchführen des gasförmigen Gemisches durch eine Membran, die für Wasserstoff durchlässiger als für Kohlenmonoxid ist, wobei ein intermediärer Permeatstrom gebildet wird, der bis zu einem für die Methanation akzeptierbaren Ausmaß mit Wasserstoff angereichert und mit Kohlenmonoxid abgereichert ist und eine Restmenge der Schwefel enthaltenden Verbindungen darin enthält, wobei die Restmenge weniger ist als deren Menge in dem gasförmigen Zufuhrgemisch,
b) Behandeln des intermediären Permeats, um die Konzentration auf weniger als etwa einige zehn ppb von restlichen Schwefel enthaltenden Verbindungen zu verringern, die in dem gasförmigen Gemisch enthalten sind, und
c) Behandeln des Produkts von Schritt b) mittels Methanation, um den Großteil des darin enthaltenen Kohlenmonoxids zu entfernen.

2. Verfahren nach Anspruch 1, bei dem der intermediäre Permeatstrom vor dem Schwefelbehandlungsschritt weniger als 5 Vol.% Kohlenmonoxid aufweist und bis zu im wesentlichen 20 ppm eines Schwefel enthaltenden Produkts enthält und wobei weiterhin bei dem Verfahren in dem Schwefelbehandlungsschritt zumindest ein Teil der Schwefel enthaltenden Produkte entfernt werden, in dem man das permeierte Produkt über ein katalytisches Bett leitet.

3. Verfahren nach Anspruch 2, bei dem das katalytische Bett eine Zinkoxid-(ZnO)-Basis hat und wobei die Dicke und die Dichte des Betts sowie der Strom des permeierten Produkts durch das Bett derart sind, daß die Konzentration an Schwefel enthaltendem Produkt in dem permeierten Produkt nach dem Schritt der Entfernung im wesentlichen bei oder weniger als 10 ppb ist.

4. Verfahren nach Anspruch 1, bei dem das intermediäre Permeat am Ausgang der Membran im wesentlichen 20 bis 100 ppm eines Schwefel enthaltenden Produkts enthält und der Behandlungsschritt b) weiterhin die folgenden Schritte ausweist:
a) Entfernen von zumindest einem Teil der Schwefel enthaltenden Produkte, indem man mit Natronlauge wäscht, und
b) Hinwegleiten desselben über ein katalytisches Bett auf Zinkoxid-Basis.

5. Verfahren nach Anspruch 1, bei dem das intermediäre Permeat am Ausgang der Menbran im wesentlichen 100 ppm oder mehr eines Schwefel enthaltenden Produkts enthält und der Behandlungsschritt b) weiterhin die folgenden Schritte aufweist:
a) Entfernen der Schwefel enthaltenden Produkte, indem man mit Aminen wäscht, um ein Gas zu erhalten, das höchsten etwa 50 ppm an Schwefel enthaltenden Produkten enthält, und
b) Hinwegleiten über ein katalytisches Bett auf Zinkoxid-Basis.

6. Verfahren nach einem der Ansprüche 1 bis 5, bei dem das permeierte und mit Schwefel behandelte Produkt vor dem Methanationsschritt erwärmt wird, wobei ein Teil der Wärme über Wärmetausch mit dem sich aus dem Methanationsschritt ergebenden Gas rückgewonnen wird.

7. Vorrichtung zur Rückgewinnung von Wasserstoff in einem gasförmigen Gemisch, das Kohlenmonoxid und Schwefel enthaltende Verbindungen aufweist, wobei die Vorrichtung aufweist:
a) eine Einrichtung zum Permeieren des gasförmigen Gemisches durch eine Membran, wobei die Membran für Wasserstoff durchlässiger als für Kohlenmonoxid ist, und
b) eine Methanationseinheit,
c) eine Entschwefelungseinheit, die zwischen einem Auslaß der Permeationseinrichtung und dem Einlaß der Methanationseinheit montiert ist;
wobei die Methanationseinheit einen Einlaß hat, der mit Wasserstoff angereichertes permeiertes Produkt aufnimmt, das aus der Permeationseinrichtung austritt, und wobei ein Auslaß einen gasförmigen Strom liefert, der im wesentlichen mit Kohlenmonoxid abgereichert ist.

8. Vorrichtung nach Anspruch 7, bei der die Entschwefelungseinheit eine Zinkoxid-(ZnO)-Falle enthält.

9. Vorrichtung nach Anspruch 8, bei der die Konzentration von Schwefel enthaltenden Produkten höher als 100 ppm nach Volumen in dem gasförmigen Gemisch am Auslaß der Permeationseinheit (2) ist und wobei die Entschwefelungseinheit weiterhin am Einlaß einen Amin-Waschturm aufweist.

10. Vorrichtung nach Anspruch 8, bei der die Konzentration an Schwefel enthaltenden Produkten in dem gasförmigen Gemisch zwischen 100 ppm und 20 ppm nach Volumen am Auslaß der Permeationseinheit (2) ist und wobei die Entschwefelungseinheit weiterhin an ihrem Einlaß einen Natronlauge-Waschturm aufweist.

11. Vorrichtung nach Anspruch 8, wobei die Temperatur der Methanationseinheit (8) aufweniger als 400° C angehoben wird, und wobei die Konzentration an Schwefel enthaltenden Produkten in dem gasförmigen Gemisch am Einlaß der Methanationseinheit etwa 1 ppm ist und wobei weiterhin die Zinkoxid-(ZnO)-Falle am Einlaß der Methanationseinheit (8) angeordnet ist.

12. Verwendung des Verfahrens nach einem der Ansprüche 1 bis 6 in einer Hydrobehandlungs- und/oder Hydrokrackanlage.

## Revendications

1. Procédé de récupération d'hydrogène dans un mélange de charge gazeux contenant au moins environ 20 % en volume d'hydrogène, moins d'environ 35 % en volume de monoxyde de carbone et un constituant gazeux soufré choisi dans le groupe constitué par le sulfure d'hydrogène et un ou plusieurs mercaptans qui sont des poisons pour les catalyseurs de méthanateur, ce procédé comprenant les étapes qui consistent à:
a) faire passer le mélange gazeux à travers une membrane qui est plus perméable à l'hydrogène qu'au monoxyde de carbone, pour former un courant de perméat intermédiaire qui est enrichi en hydrogène et épuisé en monoxyde de carbone dans une mesure acceptable pour la méthanation et renfermant une quantité résiduelle desdits composés soufrés, cette quantité résiduelle étant inférieure à leur quantité dans le mélange de charge gazeux,
b) traiter le perméat intermédiaire pour réduire la concentration à moins d'environ quelques dizaines de ppb de composés soufrés résiduels contenus dans le mélange gazeux, et
c) traiter le produit de l'étape b) par méthanation pour éliminer la majorité du monoxyde de carbone qui y est présent.

2. Procédé selon la revendication 1, dans lequel le courant de perméat intermédiaire, avant l'étape de traitement du soufre, comprend moins de 5 % en volume de monoxyde de carbone et contient jusqu'à essentiellement 20 ppm d'un produit soufré, et en outre dans lequel le procédé, dans l'étape de traitement du soufre, comprend l'étape qui consiste à éliminer au moins une partie desdits produits soufrés par passage du produit de perméation sur un lit catalytique.

3. Procédé selon la revendication 2, dans lequel le lit catalytique est à base d'oxyde de zinc (ZnO) et dans lequel l'épaisseur et la densité du lit, ainsi que l'écoulement du produit de perméation à travers ledit lit, sont tels que la concentration du produit soufré dans le produit de perméation, après l'étape d'élimination, est essentiellement proche ou inférieur à 10 ppb.

4. Procédé selon la revendication 1, dans lequel le perméat intermédiaire contient, à la sortie de la membrane, essentiellement de 20 à 100 ppm d'un produit soufré et ladite étape de traitement b) comprend en outre les étapes qui consistent à:
a) éliminer au moins une partie desdits produits soufrés par lavage à la soude caustique, et
b) faire passer le produit sur un lit catalytique à base d'oxyde de zinc.

5. Procédé selon la revendication 1, dans lequel le perméat intermédiaire contient, à la sortie de la membrane, essentiellement 100 ppm ou plus d'un produit soufré, et ladite étape de traitement b) comprend en outre les étapes qui consistent à:
a) éliminer lesdits produits soufrés par lavage avec des amines de manière à obtenir un gaz contenant environ au plus 50 ppm de produits soufrés, et
b) faire passer le produit sur un lit catalytique à base d'oxyde de zinc.

6. Procédé selon l'une des revendications 1 à 5, dans lequel le produit de perméation ayant subi le traitement pour le soufre est chauffé avant l'étape de méthanation, une partie de la chaleur étant récupérée par échange de chaleur avec le gaz résultant de l'étape de méthanation.

7. Appareil de récupération d'hydrogène dans un mélange gazeux comprenant du monoxyde de carbone et des composés soufrés, ledit appareil comprenant:
a) un dispositif pour effectuer la perméation dudit mélange gazeux à travers une membrane, ladite membrane étant plus perméable à l'hydrogène qu'au monoxyde de carbone, et
b) une unité de méthanation,
c) une unité de désulfuration montée entre une sortie du dispositif de perméation et l'entrée de l'unité de méthanation;
ladite unité de méthanation possédant une entrée qui reçoit le produit de perméation enrichi en hydrogène qui sort du dispositif de perméation et dans laquelle une sortie délivre un écoulement gazeux qui est essentiellement épuisé en monoxyde de carbone.

8. Appareil selon la revendication 7, dans lequel l'unité de désulfuration renferme un piège d'oxyde de zinc (ZnO).

9. Appareil selon la revendication 8, dans lequel la concentration en produits soufrés est supérieure à 100 ppm en volume dans le mélange gazeux, à la sortie de l'unité de perméation (2), et dans lequel l'unité de désulfuration comprend en outre, à l'entrée, une tour de lavage à l'amine.

10. Appareil selon la revendication 8, dans lequel la concentration en produits soufrés dans le mélange gazeux est comprise entre 100 ppm et 20 ppm en volume à la sortie de l'unité de perméation (2), et dans lequel l'unité de désulfuration comprend en outre, à l'entrée, une tour de lavage à la soude caustique.

11. Appareil selon la revendication 8, dans lequel la température de l'unité de méthanation (8) est élevée à moins de 400°C et dans lequel la concentration en produits soufrés dans le mélange gazeux à l'entrée de l'unité de méthanation est de l'ordre de 1 ppm, et en outre dans lequel le piège d'oxyde de zinc (ZnO) est disposé à l'entrée de l'unité de méthanation (8).

12. Utilisation du procédé selon l'une des revendications 1 à 6 dans une unité d'hydrotraitement et/ou d'hydrocraquage.
